# EUROPÄISCHE PATENTSCHRIFT

(11) **EP 1 303 016 B1**
(45) Veröffentlichungstag und Bekanntmachung des Hinweises auf die Patenterteilung: **30.08.2006**
(21) Anmeldenummer: 01124222.9
(22) Anmeldetag: 15.10.2001
(51) Int. Cl.: H02G 3/10

(54) **Verfahren zur Montage eines Aufputzapparates, Aufputzapparat sowie Montagekörper**
Method for mounting a surface mounting apparatus, surface mounting apparatus as well as mounting member
Méthode de montage d'un appareil monté en surface, appareil monté en surface ainsi qu'un élément de montage

(43) Veröffentlichungstag der Anmeldung: 16.04.2003
(73) Patentinhaber: Feller AG, 8810 Horgen (CH)
(72) Erfinder: Christen, Wilfried, 8810 Horgen (CH); Lechner, Markus, 8038 Zürich (CH)
(74) Vertreter: Blum, Rudolf Emil

(56) Entgegenhaltungen:
- DE-U- 29 807 106
- GB-A- 2 282 273

## Beschreibung

Die Erfindung betrifft ein Verfahren zur Montage eines Aufputzapparates an einer Wand gemäss Oberbegriff des Anspruchs 1. Ferner betrifft die Erfindung einen Aufputzapparat gemäss Oberbegriff des Anspruchs 8 sowie einen Montagekörper gemäss Anspruch 14.

Aufputzapparate sind zur Montage auf der Wand ausgestaltete elektrische Hausinstallationsapparate, also z.B. Netzspannungssteckdosen, Lichtschalter, Kombinationen von Steckdosen und Schaltern oder beliebige andere elektrische Kontakt- und/oder Bedienungsschnittstellen. Nach Stand der Technik wird eine Grundplatte aus Metall mit Schrauben an der Wand befestigt. Von der Grundplatte stehen an gegenüberliegenden Seiten derselben zwei Arme ab, so dass ein in Seitenansicht U-förmiger Bügel gebildet wird. An den freien Enden der Arme ist der Apparateeinsatz befestigt, also der eigentliche Schalter, die Steckdose, die Schalter/Steckdosen-Kombination usw. Die Befestigung des Einsatzes an den Armen erfolgt in der Regel mittels Schrauben. Über den Bügel mit dem Einsatz wird ein Gehäuse angeordnet, welches in der Regel zweiteilig ist und einen sich an der Wand abstützenden Gehäuseteil und eine an die Art des Einsatzes angepasste Frontplatte aufweist, die mit den an den Einsatz angepassten Öffnungen versehen ist, durch welche z.B. die Bedienungstasten des Schalters ragen oder durch welche die Steckerstifte eines Steckers in die Kontaktfedern des Steckdoseneinsatzes einführbar sind. In der Regel wird die Frontplatte an dem Einsatz mit einer Schraube befestigt und die Frontplatte fixiert zugleich den Gehäuseteil. Auch eine Befestigungsart mit Haltefedern ist bekannt. Spezielle Aufputzapparate ohne solche metallenen Bügel sind aus GB-A-2 282 273 und aus DE-U-298 07 106 bekannt. Im ersteren Fall ist bei einer Telekommunikationsdose ein rückseitiger Kasten (backbox) aus elektrisch isolierendem Material vorgesehen, der zur Aufnahme eines Apparateeinsatzes in Form einer Leiterplatte vorgesehen ist und ein erster Deckel schliesst den Kasten ab und ein zweiter Deckel übergreift den Kasten. Im zweiten Fall ist eine Grundplatte aus elektrisch isolierendem Material vorgesehen, welche an der Wand als Rahmen über die Abdeckhaube vorsteht, was entsprechend Platz benötigt.

Der Erfindung liegt die Aufgabe zugrunde eine verbesserte Montage eines Aufputzapparates der eingangs genannten Art mit bügelförmigem, metallenem Haltemittel zu schaffen, insbesondere für Apparate mit dünnwandigen Gehäusen aus Thermoplastmaterial.

Diese Aufgabe wird durch ein Verfahren nach Anspruch 1 gelöst.

Dadurch, dass wandseitig ein Isolierstoffkörper vorgesehen wird, an den das Gehäuse zum Anliegen kommt, wird dessen Lagestabilität wesentlich erhöht. Auch mit sehr geringen Gehäusewandungsdicken und entsprechender Materialersparnis beim Gehäuse kann auf diese Weise ein stabiler Apparat gebildet werden. Der aus Isolierstoff gebildete Körper kann ferner das Gehäuse vom metallenen Haltemittel, bzw. Bügel, sicher beabstanden, so dass keine Gefahr einer Berührung des Bügels besteht.

Bevorzugterweise wird der Körper bereits vor der Montage des Bügels an diesem befestigt, insbesondere mit lösbaren Schnappbefestigungen, so dass Bügel und Körper zusammen an der Wand montierbar sind, so dass sich kein erhöhter Montageaufwand ergibt. Weiter ist es bevorzugt, wenn der Körper mindestens eine seitliche Ausformung aufweist, die eine Montagehilfe als Distanzhalter für die Gehäusewand bei der Montage neben Türzargen bildet. Diese Ausformung kann mindestens teilweise oder ganz mit der Anlagefläche für das Gehäuse zusammenfallen. Weiter ist es bevorzugt, wenn der Körper einen Rahmen um den Bügel herum bildet. Falls der Körper für einen Apparat mit mehreren Bügeln und Einsätzen bestimmt ist, so soll er an diesen so befestigbar sein, dass die Bügel bzw. Einsätze untereinander oder nebeneinander angeordnet sein können.

Der Erfindung liegt weiter die Aufgabe zugrunde einen Aufputzapparat zu schaffen. Dies wird bei einem Aufputzapparat der eingangs genannten Art durch die kennzeichnenden Merkmale des Anspruchs 8 erreicht.

Durch den Körper ergeben sich für den Apparat die obenerwähnten Vorteile.

Ferner besteht die Aufgabe, die Montage von Aufputzapparaten verbessern zu können. Dies wird durch den Montagekörper gemäss Anspruch 14 erzielt.

Es ergeben sich auch dadurch die genannten Vorteile.

Im folgenden sollen Ausführungsbeispiele der Erfindung anhand der Figuren näher erläutert werden. Dabei zeigt
Figur 1 eine schaubildliche Darstellung eines Aufputzapparates über einem Wandteil, wobei die einzelnen Apparateelemente zur Verdeutlichung separat voneinander dargestellt sind; und
Figur 2 eine schaubildliche Darstellung eines Teils eines Aufputzapparates mit zwei Bügeln.

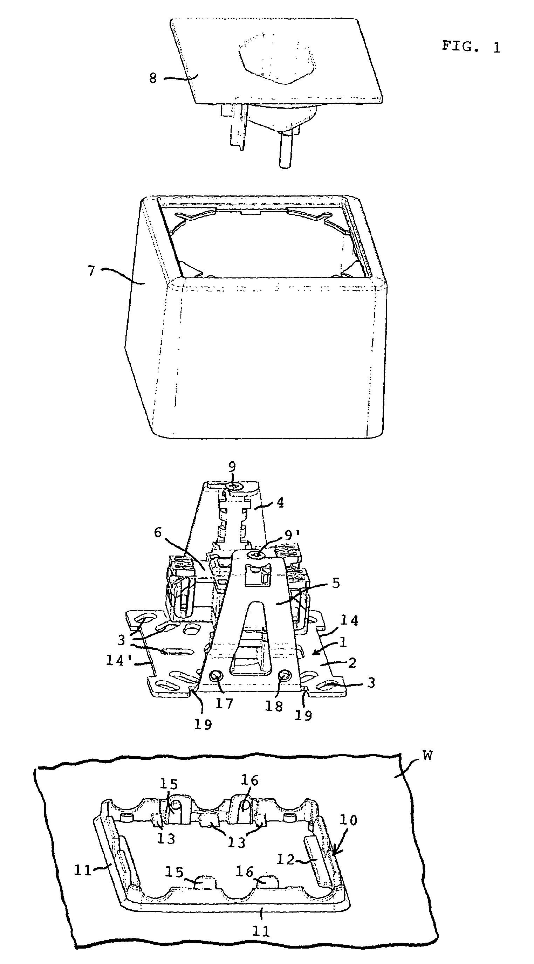

Figur 1 zeigt eine erste schaubildliche Darstellung zur Erläuterung der erfindungsgemässen Montage eines Aufputzapparates gemäss der Erfindung mit dem entsprechenden Montagekörper. Der Aufputzapparat, der in dem gezeigten Beispiel eine Einfachsteckdose ist, der aber natürlich ein beliebiger Apparat, z.B. auch ein Lichtschalter oder eine Kombination aus Lichtschalter und Steckdose sein könnte, weist in an sich bekannter Weise einen Bügel 1 auf, der zur Befestigung an der Wand W bestimmt ist. Anstelle der bügelförmigen Ausgestaltung kann aber auch ein anders geformtes Halteelement vorgesehen sein. Die Wand W ist dabei in der Figur lediglich angedeutet und ist natürlich in der Regel eine Wand mit vertikal stehender Oberfläche. Der Bügel 1 weist eine Grundplatte 2 auf, welche eine Vielzahl von Durchbrechungen 3, vorzugsweise in der Form von Langlöchern aufweist, durch welche Schrauben zur bekannten Wandbefestigung des Bügels 1 an wählbaren Stellen hindurchführbar sind. Der Bügel 1 weist weiter von der Grundplatte 2 abstehende Arme 4 und 5 auf, an deren freien Ende mittels Schrauben 9 und 9' der Einsatz 6 des Apparates auf herkömmliche Weise befestigt ist. Der Einsatz 6 ist in diesem Fall ein Steckdoseneinsatz, der entsprechende Kontakte zur Aufnahme der Steckerstifte eines am Apparat einzusteckenden Steckers aufweist. Bei einer anderen Art von Apparat, z.B. einem Lichtschalter, wäre der Einsatz 6 ein entsprechender Schalter. Die Arme 4 und 5 sind vorzugsweise einstückig mit der Grundplatte ausgeführt und sind ferner bevorzugterweise als in der Seitenansicht viereckige Platten ausgeführt, die an den Verbindungsstellen mit der Grundplatte 2 breiter sind als an dem freien Ende der Arme. Auf diese Weise ergibt sich eine erhöhte Stabilität des Bügels. Der Bügel 1 mit der Grundplatte 2 und den Armen 4 und 5 kann im wesentlichen als U-förmig bezeichnet werden, wenn man ihn in einer um seine vertikale Achse um 90° gedrehten Stellung betrachten würde.

Das Gehäuse des Apparates umfasst das Gehäuseteil 7 und die Frontplatte 8. Das Gehäuseteil 7 kann für verschiedene Ausführungen des Apparates dasselbe sein, während die Frontplatte 8 natürlich an den entsprechenden Einsatz 6 angepasst ist und entsprechende Öffnungen für den Zugang zu dessen Kontakten bzw. im Falle eines Schalters Öffnungen für dessen Betätigungselement aufweist. Das Gehäuseteil 7 wird über den an der Wand mit dem Einsatz 6 befestigten Bügel geschoben, sobald die Verdrahtung des Einsatzes beendet ist und danach wird die Frontplatte 8 in der Regel am Einsatz 6 befestigt, wodurch sich auch eine Fixation des Gehäuseteils 7 ergibt. Das Gehäuseteil 7 weist ferner mindestens an einem seiner wandseitigen Bereiche einen Durchbruch zur Zuführung der elektrischen Kabel zum Einsatz 6 auf, welche Kabel in einem Kabelführungsrohr an der Wand verlegt sind.

Gemäss der Erfindung ist nun ein Körper 10 vorgesehen, welcher wandseitig am Bügel 1 angeordnet ist. In der Figur 1 ist der Körper 10 getrennt vom Bügel 1 bereits auf der Wand befindlich dargestellt. Dies könnte eine Montagesituation sein, wobei der Körper 10 an der Wand festgehalten wird und der Bügel 1 auf bzw. in den Körper gehalten wird und worauf an der Wand Bohrlöcher entsprechend den Ausnehmungen 3 angezeichnet werden, so dass nach dem Bohren der entsprechenden Löcher der Bügel 1 an der Wand W festgeschraubt werden kann. Der Körper 10 kann dann lose oder vom Bügel 1 festgeklemmt an der Wand angeordnet sein, so dass er den Bügel mindestens teilweise umgibt. Bevorzugt ist indes ein anderes Vorgehen, bei welchem der Körper 10 mittels Befestigungsmitteln bereits am Bügel 1 befestigt ist, so dass die Montage des Bügels und des Körpers gemeinsam erfolgt, bzw. dass die Montage des Körpers keinen zusätzlichen Montageschritt an der Wand benötigt. Im dargestellten Beispiel ist der Körper 10 rahmenförmig, so dass er die Grundplatte 2 des Bügels 1 vollständig umgibt. Dies ist indes nur eine bevorzugte Ausführungsform, der Körper 10 könnte auch aus einem Teil bestehen, das die Grundplatte 2 nur zum Teil umgibt oder könnte auch aus mehreren Teilen bestehen, die die Grundplatte 2 entweder vollständig oder auch nur zum Teil umgeben. In dem gezeigten Beispiel weist der Körper 10 Schnappmittel 15 und 16 auf, die Zapfen aufweisen, die in Ausnehmungen 17 und 18 an den Armen 4 und 5 des Bügels 1 einrasten können. Auf diese Weise kann der Körper 10 am Bügel 1 befestigt werden, so dass er die Grundplatte randseitig umgibt.

Die Lage des Bügels 1 bzw. der Grundplatte 2 im rahmenförmigen Körper wird dabei durch Anschläge 12 und 13 bestimmt, welche an entsprechenden Kanten 14, 14' und 19 der Grundplatte angreifen, so dass sich eine definierte Lage der Grundplatte 2 innerhalb des rahmenförmigen Körpers 10 ergibt. Bei dieser bevorzugten Ausführungsform kann der Körper 10 durch einfaches Einrasten an der Grundplatte 2 bzw. den Armen 4 und 5 befestigt werden, so dass Bügel 1 und Körper 10 eine Einheit bilden. Diese Einheit kann bei der Montage sowohl beim Anzeichnen der Bohrlöcher mittels der Grundplatte 2 als Schablone als auch beim Anschrauben des Bügels 1 an der Wand gemeinsam gehandhabt werden, so dass sich kein erhöhter Montageaufwand durch den Körper ergibt. Sollte der Körper nicht benötigt werden, so kann er durch Lösen der Schnappverbindungen 15, 16, 17, 18 ohne weiteres vom Bügel entfernt werden.

Gemäss der Erfindung bildet der Körper 10 nun eine Anlagefläche aus, welche dazu bestimmt ist, als Anlagefläche für den wandseitigen Randbereich des Gehäuseteils 7 zu dienen. Im gezeigten Beispiel des rahmenförmigen Körpers 10 ist die Anlagefläche 11 als ununterbrochen umlaufende schiefe Ebene dargestellt. Dies ist nur als Ausführungsbeispiel zu verstehen. Die Anlagefläche 11 könnte auch aus mehreren mit Unterbrechungen derselben am Rahmen angeordneten Anlageflächen bestehen, so dass sich das Gehäuseteil 7 nur teilweise an dem Körper 10 anlegen kann. Weiter könnte die Anlagefläche 11 auch nicht als schiefe Ebene, sondern als senkrecht von der Wand abstehende Ebene ausgeführt sein. Bei der dargestellten Ausführung als schiefe Ebene ist auch der wandseitige Unterteil des Gehäuseteils 7 innen vorzugsweise abgeschrägt, so dass sich die beiden Flächen korrespondierend aneinanderlegen. Das Gehäuseteil 7 steht dabei an der Kontaktstelle zur Wand nur noch geringfügig über die Anlagefläche vor, da dort das Gehäuseteil 7 sehr dünnwandig ist. Im anderen Fall der nicht abgeschrägten Anlagefläche 11 ist die Wandung im unteren, wandseitigen Gehäuseteil nicht verjüngt. Die Bezeichnung "Anlagefläche" bedeutet auch nicht, dass das Gehäuseteil zwangsläufig überall an der Anlagefläche anliegt. Das Gehäuseteil kann einen grösseren Innenumfang aufweisen, als der Aussenumfang der Anlagefläche ist. In diesem Fall gelangt das Gehäuseteil 7 nur dann zur Anlage an die Anlagefläche, wenn von Aussen her ein Druck auf das Gehäuseteil 7 in Richtung der Anlagefläche hin erfolgt, so dass sich das Gehäuse geringfügig verformt, bis es zum Aufliegen an die Anlagefläche gelangt. Bevorzugt ist indes eine Dimensionierung des Gehäuses und der Anlagefläche 11 des Rahmens derart, dass diese beiden Teile nach der Montage aneinander anliegen, so dass das Gehäuseteil 7 wandseitig durch den Körper 10 an der Wand stabilisiert wird. Dadurch ergibt sich eine besonders stabile Ausführung des Apparates, die die entsprechende Qualitätsanmutung bewirkt.

Wie ersichtlich, bewirkt der Körper 10, der aus Isolierstoff besteht, z.B. aus einem glasfaserverstärkten Thermoplast, dass der Umfang der Grundplatte 2, die in der Regel aus Metall besteht, von ausserhalb des Apparates nicht berührt werden kann. Dieser positive Effekt stellt sich ein, wenn der Körper 10, wie im Beispiel, so ausgeführt ist, dass er die Grundplatte 2 und die wandseitigen Bereiche der Arme 4 und 5 vollständig, in der Form eines Rahmens, umgibt. Auch bei seitlichem Druck auf das Gehäuseteil 7 nahe der Wand, sogar mit einem spitzen Werkzeug, ist es nun nicht mehr möglich, in elektrisch leitenden Kontakt mit dem Bügel 1 zu gelangen, da der Körper 10 einerseits eine Verformung des Gehäuseteils 7 in diesem Bereich praktisch ausschliesst und andererseits auch eine Berührung des Bügels 1 durch Eindringen zwischen Gehäuseteil und Wand ausschliesst.

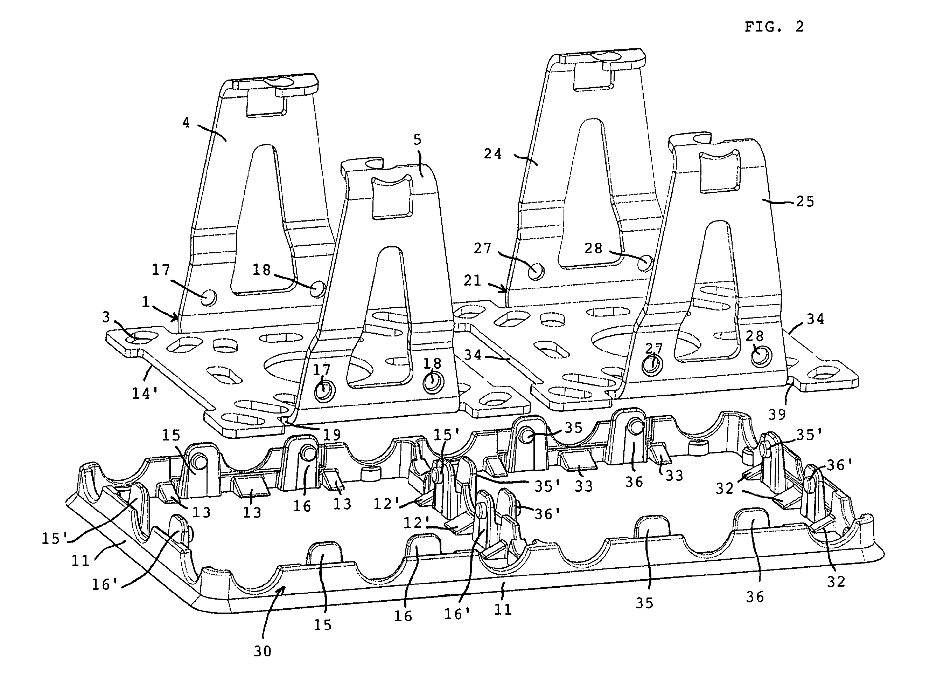

Figur 2 zeigt eine Ausführungsform für einen Apparat mit zwei Einsätzen, wobei diese in Figur 2 nicht dargestellt sind, sondern nur der entsprechende Körper 30, der zur Befestigung von zwei Bügeln 1 bzw. 21 ausgestaltet ist. Der Körper 30 ist dabei wiederum mit Schnappmitteln 15 und 16 ausgestaltet, die in entsprechende Öffnungen 17 und 18 des Bügels 1 eingreifen können. Entsprechend weist der Körper 30 Schnappmittel 35 und 36 auf, die in entsprechende Ausnehmungen 27 und 28 des Bügels 21 eingreifen können. Der Körper 30 ist wiederum mit Anschlägen 13 und 12' versehen, wobei die Anschläge 12' schmaler sind als die Anschläge 12 des Körpers 10. Entsprechend sind Anschläge 33 und 32 für den Bügel 21 mit Ausnehmungen 34 und 39 vorgesehen. Der Körper 30 kann dadurch wiederum genau lagedefiniert an den Bügeln 1 und 21 befestigt werden, wobei sich auf diese Weise sogar eine Einheit von zwei Bügeln schaffen lässt, die für den Montageschritt an der Wand somit besser handhabbar sind. Eine flexible Ausführung des Körpers 30 erlaubt dabei die Montage solcher Anordnungen auch auf unebenen Wänden. In der gezeigten Darstellung sind die Einsätze so zu montieren, dass sich eine Montage des Apparates an der Wand mit in vertikaler Richtung übereinanderliegenden Einsätzen ergibt. Bevorzugterweise ist nun der Körper so ausgeführt, dass die Bügel 1 bzw. 21 auch in um 90° verdrehter Stellung am Körper befestigbar sind. Zu diesem Zwecke sind die Schnappmittel 15' und 16' vorgesehen bzw. die Schnappmittel 35' und 36', welche ein Einschnappen der Bügel 1 bzw. 21 in der um 90° verdrehten Stellung erlauben, indem die Schnappmittel 15', 16' in die Ausnehmungen 17 und 18 des Bügels 1 und die Schnappmittel 35' und 36' in die Ausnehmungen 27 und 28 des Bügels 21 eingreifen. Dies erlaubt eine Montage des Apparates an der Wand derart, dass die beiden Einsätze horizontal nebeneinander liegen, ohne dass dafür ein anderer Körper 30 vonnöten wäre. Auch in diesem Fall bildet der Körper 30 mit der Anlagefläche 11 eine Anlage für den wandseitigen Gehäuseunterteil, welcher in Figur 2 nicht dargestellt ist. Das Gehäuse ist in diesem Fall auf bekannte Weise so ausgeführt, dass der Gehäuseteil 7 beide Bügel 1 und 21 überdeckt und zwei Ausnehmungen für zwei Frontplatten 8 aufweist. Solches ist bekannt und muss hier nicht weiter geschildert werden.

Die Anlagefläche 11, welche vom Körper 30 absteht, bildet in beiden Fällen auch eine Art Fuss- oder Abstandsgeber aus, welcher die genaue Montage parallel zu einer Türzarge erlaubt. Auch in diesem Fall bildet natürlich der Körper 30 eine stabilisierende wandseitige Anlage für den wandseitigen Gehäuserand und einen Berührungsschutz gegen Berührung der elektrisch leitenden Bügel, der auch in eine elektrisch leitende Verbindung zwischen Bügel und Zarge ausschliesst.

## Patentansprüche

1. Verfahren zur Montage eines Aufputzapparates (1, 6, 7, 8, 10) an einer Wand (W), bei welchem mindestens ein bügelförmiges, metallenes Haltemittel (1;21) des Aufputzapparates an der Wand (W) befestigt wird, das den Apparateeinsatz (6) des Aufputzapparates aufnimmt, der vom Apparategehäuse (7, 8)des Aufputzapparates abgedeckt wird, **dadurch gekennzeichnet, dass** am wandseitigen Bereich des bügelförmigen metallenen Haltemittels (1;21) mindestens ein Körper (10;30) aus Isolierstoff angeordnet wird, der mindestens eine Anlagefläche (11) für den wandseitigen Randbereich des Apparategehäuses (7,8) bildet, derart, dass der Randbereich und die Anlagefläche nach der Montage aneinander anliegen.

2. Verfahren nach Anspruch 1, **dadurch gekennzeichnet, dass** der Körper (10;30) vor der Montage des Haltemittels (1;21) auf der Wand (W) am Haltemittel befestigt wird.

3. Verfahren nach Anspruch 2, **dadurch gekennzeichnet, dass** der Körper (10;30) am Haltemittel (1;21) durch Befestigungsmittel, insbesondere Schnappmittel (15, 16, 17, 18; 15', 16', 17, 18; 35, 36, 27, 28; 35', 36', 27, 28), lösbar oder unlösbar befestigt wird.

4. Verfahren nach einem der Ansprüche 1 bis 3, **dadurch gekennzeichnet, dass** der Körper (10;30) als das Haltemittel (1;21) entlang seines Umfanges teilweise oder vollständig umgebender Körper ausgestaltet ist.

5. Verfahren nach einem der Ansprüche 1 bis 4, **dadurch gekennzeichnet, dass** die Lage des Haltemittels (1;21) am oder im Körper (10;30) durch Anschlagmittel (12, 12', 13, 14, 14', 19, 32, 33) definiert wird.

6. Verfahren nach einem der Ansprüche 1 bis 5, **dadurch gekennzeichnet, dass** der Körper (10;30) seitliche Ausformungen (11) aufweist, die als Montagehilfe für die abstandsdefinierte Montage des Apparates in bezug einer Türzarge in der Wand verwendet werden.

7. Verfahren nach einem der Ansprüche 1 bis 6, **dadurch gekennzeichnet, dass** der wandseitige Gehäuserand und/oder die wandseitige Gehäuseinnenfläche bei der Befestigung des Apparategehäuses (7, 8) in Anlage an der Anlagefläche (11) zu liegen kommt.

8. Aufputzapparat mit mindestens einem bügelförmigen, metallenen Haltemittel (1; 21), zur Wandbefestigung des Apparates, mindestens einem am Haltemittel befestigten Apparateeinsatz (6) und einem Apparategehäuse (7, 8), **gekennzeichnet durch** mindestens einen am wandseitigen Fuss (2) des Haltemittels (1;21) befestigten oder befestigbaren Körper (10; 30) aus Isolierstoff, der mindestens eine Anlagefläche (11) für den wandseitigen Randbereich des Apparategehäuses (7,8) aufweist, wobei die Anlagefläche und der Randbereich so ausgestaltet sind, dass sie bei montiertem Aufputzapparat aneinander anliegen.

9. Aufputzapparat nach Anspruch 8, **dadurch gekennzeichnet, dass** das Haltemittel (1; 21) und der Körper (10; 30) Befestigungsmittel, insbesondere Schnappmittel (15, 16, 17, 18; 15', 16', 17, 18; 35, 36, 27, 28; 35', 36', 27, 28), zur lösbaren oder unlösbaren Befestigung aneinander aufweisen.

10. Aufputzapparat nach Anspruch 8 oder 9, **dadurch gekennzeichnet, dass** der Körper aus mehreren Teilen gebildet ist, oder dass der Körper einteilig, insbesondere rahmenförmig, ausgestaltet ist.

11. Aufputzapparat nach einem der Ansprüche 8 bis 10, **dadurch gekennzeichnet, dass** am Körper (10; 30) und am Haltemittel (1; 21) Anschlagmittel 12, 12', 13, 14, 14', 19, 32, 33) vorgesehen sind, durch die die gegenseitige Lage von Körper und Haltemittel definiert wird.

12. Aufputzapparat nach einem der Ansprüche 8 bis 11, **dadurch gekennzeichnet, dass** die Anlagefläche (11) oder die Anlageflächen bezüglich der Ebene des Fusses (2) des Haltemittels schief stehende Ebenen und/oder senkrecht stehende Ebenen sind.

13. Aufputzapparat nach einem der Ansprüche 8 bis 12, **dadurch gekennzeichnet, dass** das Haltemittel ein Bügel (1; 21) mit einer den Fuss bildenden Grundplatte (2) und davon abgewinkelten Arme (4, 5) ist, welche Arme eine viereckige Form mit einer grundplattenseitigen längeren Seite und einer gegenüberliegenden kürzeren Seite aufweisen.

14. Montagekörper (10; 30) mit mindestens einem darin aufgenommenen metallenen Bügel (1, 21) eines Aufputzapparates wobei der Bügel zur Aufnahme des Apparateeinsatzes des Aufputzapparates ausgestaltet ist und wobei der Montagekörper als Rahmen aus Isolierstoff ausgestaltet ist, der an seiner Innenseite mit Anschlagmitteln (12, 12', 13, 32, 33) und Befestigungsmitteln (15, 15', 16, 16', 35, 36, 35', 36') für den Bügel (1, 21) versehen ist und an seiner Aussenseite mindestens eine Anlagefläche (11) aufweist, die zum Anliegen an die Gehäuseinnenseite des Aufputzapparategehäuses bestimmt ist.

## Claims

1. Method for mounting an on the surface device (1, 6, 7, 8, 10) on a wall (W), wherein at least one bracket-shaped, metallic holding means (1;21) of the on the surface device is attached to the wall (W), that receives the device insert (6) of the on the surface device, which is covered by the device housing (7, 8) of the on the surface device, **characterized in that** at least one body (10;30) of insulating material is arranged on the wall-adjacent area of the bracket-shaped, metallic holding means (1;21), said body forming at least one contact surface (11) for the wall-adjacent border area of the device housing (7,8) such, that the border area and the contact surface rest against each other after the mounting.

2. Method of claim 1, wherein the body (10;30) is attached to the wall (W) before mounting the holding means (1;21).

3. Method of claim 2, wherein the body (10;30) is detachably or un-detachably connected to the holding means (1;21) by fastening means, in particular by snapping means (15, 16, 17, 18; 15', 16', 17, 18; 35, 36, 27, 28; 35', 36', 27, 28).

4. Method of one of the claims 1 to 3, wherein the body (10;30) is formed such that it encompasses the holding means (1;21) partly or entirely along its extent.

5. Method of one of the claims 1 to 4, wherein the location of the holding means (1;21) on or in the body (10;30) is defined by stop means (12, 12', 13, 14, 14', 19, 32, 33).

6. Method of one of the claims 1 to 5, wherein the body (10;30) has lateral mouldings (11), that are used as fit-up aid for distance-defined mounting of the device in relation to a door frame in the wall.

7. Method of one of the claims 1 to 6, wherein the wall-adjacent edge of the housing and/or the wall-adjacent inner surface of the housing come to rest in attachment to the contact surface (11) when fastening the device housing (7, 8).

8. On the surface device with at least one bracket-shaped, metallic holding means (1; 21) for wall attachment of the device, at least one device insert (6) being attached to the holding means and a device housing (7, 8), **characterized by** at least one body of insulating material which is attached or is attachable to a wall-adjacent foot (2) of the holding means(1; 21), said body having at least one contact surface (11) for the wall-adjacent border area of the device housing (7,8), wherein the contact surface and the border area are formed such that they rest against each other in the mounted on the surface device.

9. On the surface device of claim 8, wherein the holding means (1; 21) and the body (10; 30) has fastening means, in particular snapping means (15, 16, 17, 18; 15', 16', 17, 18; 35, 36, 27, 28; 35', 36', 27, 28) for detachable or un-detachable attachment to one another.

10. On the surface device of claim 8 or claim 9, wherein the body is formed of several parts or wherein the body is formed as one-piece, in particular frame-shaped.

11. On the surface device of one of the claims 8 to 10, wherein stop means (12, 12', 13, 14, 14', 19, 32, 33) are provided at the body (10; 30) and at the holding means (1; 21), by which the mutual location of body and holding means is defined.

12. On the surface device of one of the claims 8 to 11, wherein the contact surface (11) or the contact surfaces with regard to the plane of the foot (2) of the holding means are inclined and/or perpendicular planes.

13. On the surface device of one of the claims 8 to 12, wherein the holding means is a bracket (1; 21) with a baseplate (2) forming the foot und arms (4, 5) bent therefrom, said arms having a squared form with a baseplate-adjacent longer side and an opposite shorter side.

14. Mounting body (10; 30) with at least one metallic bracket (1, 21) of an on the surface device incorporated therein, wherein the bracket is formed for receiving the device insert of the on the surface device and wherein the mounting body is formed as frame of insulating material, providing on its inside stop means (12, 12', 13, 32, 33) and fastening means (15, 15', 16, 16', 35, 36, 35', 36') for the bracket (1, 21) and on its outside at least one contact surface (11) intended for resting against the inside of the housing of the on the surface device.

## Revendications

1. Procédé pour monter à un mur (W) un appareil installé en surface (1, 6, 7, 8, 10), d'après lequel on fixe au mur (W) au moins un moyen de maintien (1 ; 21) métallique - de l'appareil installé en surface - en forme d'étrier qui reçoit la pièce d'insertion (6) - de l'appareil installé en surface - recouverte par le boîtier d'appareil (7, 8) de l'appareil installé en surface, **caractérisé en ce qu'**au moins un corps (10 ; 30) en matériau isolant qui forme au moins une surface d'appui (11) pour la zone de bord - côté mur - du boîtier d'appareil (7, 8) se trouve sur la zone côté mur du moyen de maintien (1 ; 21) métallique en forme d'étrier, de telle manière que la zone de bord et la surface d'appui se touchent après le montage.

2. Procédé selon la revendication 1, **caractérisé en ce que** le corps (10 ; 30) est fixé au moyen de maintien avant de monter le moyen de maintien (1 ; 21) au mur (W).

3. Procédé selon la revendication 2, **caractérisé en ce que** le corps (10 ; 30) est fixé de façon amovible ou inamovible au moyen de maintien (1 ; 21) par des moyens de fixation, en particulier des moyens d'enclenchement (15, 16, 17, 18; 15', 16', 17, 18 ; 35, 36, 27, 28 ; 35', 36', 27, 28).

4. Procédé selon l'une des revendications 1 à 3, **caractérisé en ce que** le corps (10 ; 30) est conçu comme corps qui entoure en entier ou en partie le moyen de maintien (1 ; 21) le long de son pourtour.

5. Procédé selon l'une des revendications 1 à 4, **caractérisé en ce que** la position du moyen de maintien (1 ; 21) sur ou dans le corps (10 ; 30) est définie par des moyens d'arrêt (12, 12', 13, 14, 14', 19, 32, 33).

6. Procédé selon l'une des revendications 1 à 5, **caractérisé en ce que** le corps (10 ; 30) présente des façonnages (11) latéraux qu'on utilise comme auxiliaires de montage pour monter l'appareil à une distance définie par rapport à un dormant de porte dans le mur.

7. Procédé selon l'une des revendications 1 à 6, **caractérisé en ce que** le bord de boîtier côté mur et/ou la surface intérieure de boîtier côté mur s'applique contre la surface d'appui (11) quand on fixe le boîtier d'appareil (7, 8).

8. Appareil installé en surface muni d'au moins un moyen de maintien (1; 21) métallique en forme d'étrier pour fixer l'appareil au mur, d'au moins une pièce d'insertion d'appareil (6) fixée au moyen de maintien et d'un boîtier d'appareil (7, 8), **caractérisé par** au moins un corps (10 ; 30), en matériau isolant, qui est fixé ou qui peut être fixé au pied (2) - côté mur - du moyen de maintien (1 ; 21) et qui comporte au moins une surface d'appui (11) pour la zone de bord - côté mur - du boîtier d'appareil (7, 8), la surface d'appui et la zone de bord étant conçues de telle manière qu'elles se touchent quand l'appareil installé en surface est monté.

9. Appareil installé en surface selon la revendication 8, **caractérisé en ce que** le moyen de maintien (1; 21) et le corps (10 ; 30) comportent des moyens de fixation, en particulier des moyens d'enclenchement (15, 16, 17, 18 ; 15', 16', 17, 18 ; 35, 36, 27, 28 ; 35', 36', 27, 28), pour les fixer l'un à l'autre de façon amovible ou inamovible.

10. Appareil installé en surface selon la revendication 8 ou 9, **caractérisé en ce que** le corps est formé de plusieurs parties ou que le corps est en une seule partie, en particulier en forme de cadre.

11. Appareil installé en surface selon l'une des revendications 8 à 10, **caractérisé en ce que** sur le corps (10 ; 30) et sur le moyen de maintien (1 ; 21) on prévoit des moyens d'arrêt (12, 12', 13, 14, 14', 19, 32, 33) grâce auxquels est définie la position réciproque des corps et des moyens de maintien.

12. Appareil installé en surface selon l'une des revendications 8 à 11, **caractérisé en ce que** la surface d'appui (11) ou les surfaces d'appui sont des plans obliques et/ou des plans perpendiculaires par rapport au plan du pied (2) du moyen de maintien.

13. Appareil installé en surface selon l'une des revendications 8 à 12, **caractérisé en ce que** le moyen de maintien est un étrier (1 ; 21) comportant une plaque de base (2) qui forme le pied et des bras (4, 5) repliés par rapport à elle, ces bras sont rectangulaires et ont un côté assez grand du côté de la plaque de base et un côté plus petit en face.

14. Corps de montage (10 ; 30) muni d'au moins un étrier (1, 21) métallique - d'un appareil installé en surface - qui y est reçu, l'étrier étant conçu pour recevoir la pièce d'insertion de l'appareil installé en surface et le corps de montage étant un cadre en matériau isolant qui est équipé sur son côté intérieur de moyens d'arrêt (12, 12', 13, 32, 33) et de moyens de fixation (15, 15', 16, 16', 35, 36, 35', 36') pour l'étrier (1 ; 21) et sur soncôté extérieur comporte au moins une surface d'appui (11) destinée à s'appliquer au côté intérieur du boîtier de l'appareil installé en surface.
